# FASCICULE DE BREVET EUROPEEN

(11) **EP 4 110 664 B1**
(45) Date de publication et mention de la délivrance du brevet: **02.07.2025**
(21) Numéro de dépôt: 21706621.6
(22) Date de dépôt: 24.02.2021
(51) Int. Cl.: B60T 17/02, B60T 17/22, F16D 65/00

(54) **DÉTECTION DE FILTRE DANS UN SYSTÈME DE CAPTATION DE PARTICULES DE FREINAGE**
FILTERDETEKTION IN EINEM SYSTEM ZUR ERFASSUNG VON BREMSTEILCHEN
FILTER DETECTION IN A SYSTEM FOR CAPTURING BRAKING PARTICLES

(30) Priorité: 28.02.2020 FR 2002020
(43) Date de publication de la demande: 04.01.2023
(73) Titulaire: Tallano Technologies, 75015 Paris (FR)
(72) Inventeur: ADAMCZAK, Loïc, 92100 Boulogne Billancourt (FR); ROCCA-SERRA, Christophe, 75016 PARIS (FR)
(74) Mandataire: Plasseraud IP
(86) Numéro de dépôt international: PCT/EP2021/054609
(87) Numéro de publication internationale: WO 2021/170680

(56) Documents cités:
- FR-A1- 3 057 040
- GB-A- 2 538 735
- KR-A- 20050 069 079
- US-A1- 2010 065 387
- US-A1- 2017 374 436
- US-A1- 2020 046 040

## Description

La présente invention concerne un système de captation des particules de freinage d'un système de freinage à friction, qui comporte une source de dépression, un circuit pneumatique qui relie le système de freinage à friction à la source de dépression, et un filtre situé sur le circuit pneumatique et monté sur un support.

De tels systèmes de freinage à friction peuvent équiper des véhicules routiers ou ferroviaires. De tels systèmes de freinage à friction peuvent aussi équiper des machines stationnaires à rotor comme des éoliennes ou des machines industrielles.

FR 3057040 A1 divulgue un ensemble de frein à captation de particules issues du freinage.

Dans de tels systèmes il est prévu une source de dépression (par exemple une turbine d'aspiration entrainée par un moteur) qui est reliée par un circuit pneumatique au système de freinage à friction, et un filtre de collecte des particules qui sont émises par le système de freinage. Ce filtre est placé en amont de la source de dépression, et empêche un passage des particules au travers de la source de dépression et leur diffusion dans l'atmosphère. Cependant, dans certaines situations, ce filtre peut être absent, par exemple parce qu'il n'a pas été remplacé lors d'une révision du véhicule. Une absence du filtre est préjudiciable car les particules vont alors passer dans la source de dépression et être libérées dans l'atmosphère. La fonction de filtrage n'est alors plus assurée.

### Description de l'invention

La présente invention vise à remédier à ces inconvénients.

L'invention vise à proposer un système de captation de particules de freinage qui permette d'informer l'utilisateur du véhicule de l'absence du filtre du système de captation, afin que l'utilisateur puisse agir en conséquence, et notamment placer un filtre dans le système.

Ce but est atteint grâce au fait que le système de captation comporte une unité de commande et un dispositif de détection du filtre qui est apte à envoyer au moins un signal à l'unité de commande, l'unité de commande étant apte à déterminer, sur la base de ce signal, l'absence du filtre sur le circuit pneumatique, et à informer un utilisateur de cette absence du filtre.

Grâce à ces dispositions, une absence du filtre sur le circuit pneumatique est détectée et déterminée, et l'utilisateur est immédiatement informé par l'intermédiaire de l'unité de commande. On note que l'unité de commande est apte à déterminer à la fois une absence du filtre sur son support, et une absence du support (avec son filtre) sur le conduit. En effet, dans certains cas il est plus pratique de changer l'ensemble constitué du support et du filtre. L'utilisateur peut alors agir en conséquence, et placer un filtre sur son support, ou placer un support (avec son filtre) sur le conduit afin d'empêcher la dissémination de particules nocives dans l'atmosphère.

Avantageusement le dispositif de détection comporte un capteur de pression qui est situé sur le circuit pneumatique en amont du filtre, le capteur de pression étant apte à envoyer à l'unité de commande dans un signal une mesure de la pression P₁ dans le circuit pneumatique en amont du filtre, l'unité de commande, à réception de ce signal, étant apte à comparer la pression mesurée P₁ avec une pression de référence P_{R} qui est la pression dans le circuit pneumatique en absence de filtre pour l'état de fonctionnement de référence E_{R} de la source de dépression lors de la mesure de pression P₁ par le capteur de pression, l'unité de commande étant apte à informer un utilisateur de l'absence du filtre sur le circuit pneumatique lorsque la pression mesurée P₁ est sensiblement égale à la pression de référence P_{R} ou est sensiblement égale à la pression atmosphérique.

Ainsi, dans le cas où le circuit ou le support du filtre comporte déjà un capteur de pression, il n'est pas nécessaire d'installer un dispositif de détection supplémentaire.

Avantageusement le dispositif de détection comporte un premier capteur de pression qui est situé sur le circuit pneumatique en amont du filtre, le capteur de pression étant apte à envoyer à l'unité de commande dans un signal une mesure de la première pression P₁ dans le circuit pneumatique en amont du filtre, et un second capteur de pression qui est situé sur le circuit pneumatique en aval du filtre et qui est apte à envoyer à l'unité de commande dans un signal une mesure de la seconde pression P₂ dans le circuit pneumatique en aval du filtre, l'unité de commande, à réception de ce au moins un signal, étant apte à comparer la première pression mesurée P₁ et la seconde pression mesurée P₂, l'unité de commande étant apte à informer un utilisateur de l'absence du filtre sur le circuit pneumatique lorsque la première pression mesurée P₁ et la seconde pression mesurée P₂ sont sensiblement égales ou lorsque la première pression mesurée P₁ est sensiblement égale à la pression atmosphérique.

Ainsi, dans le cas où le circuit ou le support du filtre comporte déjà deux capteurs de pression, il n'est pas nécessaire d'installer un dispositif de détection supplémentaire.

Avantageusement le dispositif de détection comporte un détecteur par contact qui est apte à détecter le contact entre le filtre et le support, le détecteur par contact étant apte à envoyer un signal à l'unité de commande lorsqu'il n'y a pas de contact entre le filtre et le support, l'unité de commande, à réception du signal, étant apte à informer un utilisateur de l'absence du filtre.

Ainsi, la fiabilité de la détection du filtre est améliorée.

Avantageusement le dispositif de détection comporte un détecteur par contact qui est apte à détecter le contact entre le support et le circuit, le détecteur par contact étant apte à envoyer un signal à l'unité de commande lorsqu'il n'y a pas de contact entre le support et le circuit, l'unité de commande, à réception du signal, étant apte à informer un utilisateur de l'absence du filtre.

Ainsi, la fiabilité de la détection du filtre est améliorée.

Avantageusement le dispositif de détection comporte un identifiant qui est porté par le filtre ou par le support et un détecteur sans contact qui est fixé à proximité du support et qui est apte à détecter la présence de l'identifiant, le détecteur sans contact étant apte à envoyer un signal à l'unité de commande lorsque l'identifiant n'est pas détecté par le détecteur sans contact, l'unité de commande, à réception du signal, étant apte à informer un utilisateur de l'absence du filtre.

Ainsi, il n'est pas nécessaire d'établir un positionnement extrêmement précis du filtre sur son support, il suffit que le filtre soit monté sur le support.

Par exemple, l'identifiant est porté par le support et le détecteur sans contact est fixé sur le conduit.

Par exemple, l'identifiant est porté par le filtre et le détecteur sans contact est fixé sur le support.

L'invention concerne également un procédé de détection de l'absence d'un filtre dans un système de captation des particules de freinage d'un système de freinage à friction, ce système de captation comportant une source de dépression, un circuit pneumatique qui relie le système de freinage à friction à la source de dépression, un filtre situé sur le circuit pneumatique et monté sur un support.

Selon l'invention, le procédé comprend les étapes suivantes
(a) On fournit une unité de commande et un dispositif de détection du filtre qui font partie du système de captation ;
(b) Le dispositif de détection envoie au moins un signal à l'unité de commande ;
(c) L'unité de commande détermine, sur la base de ce signal, l'absence du filtre sur le circuit pneumatique, et informe un utilisateur de cette absence du filtre.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue schématique d'un système de captation selon l'invention,
[Fig. 2] La figure 2 est une vue en perspective d'un boitier portant un filtre, et d'un dispositif de détection de ce filtre dans le système de captation de la figure 1,
[Fig. 3] La figure 3 est une vue en perspective d'un boitier portant un filtre, et d'une variante du mode de réalisation d'un dispositif de détection de ce filtre dans le système de captation de la figure 2,
[Fig. 4] La figure 4 est une vue en perspective d'un boitier portant un filtre, et d'un deuxième mode de réalisation d'un dispositif de détection de ce filtre dans le système de captation de la figure 1,
[Fig. 5] La figure 5 est une vue en perspective d'un boitier portant un filtre, et d'une variante d'un deuxième mode de réalisation d'un dispositif de détection de ce filtre dans le système de captation de la figure 1,
[Fig. 6] La figure 6 est une vue en perspective d'un boitier portant un filtre, et d'un troisième mode de réalisation d'un dispositif de détection de ce filtre dans le système de captation de la figure 1,
[Fig. 7] La figure 7 est une vue en perspective d'un boitier portant un filtre, et d'une variante d'un troisième mode de réalisation d'un dispositif de détection de ce filtre dans le système de captation de la figure 1.

### Description détaillée de l'invention

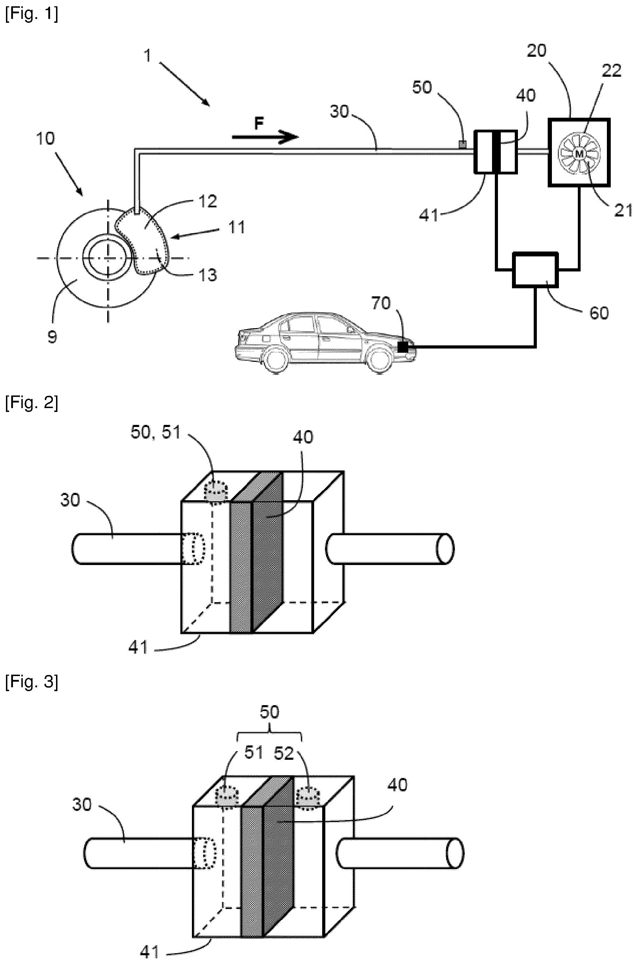

La figure 1 montre schématiquement un système de captation 1 de particules selon l'invention, ces particules étant émises par un système de freinage à friction 10.

Ce système de freinage à friction 10 comporte une plaquette de frein 11 pour le freinage d'un véhicule. Cette plaquette 11 comprend une semelle 12 et une garniture 13 réalisée en matériau de friction fixée sur la semelle 12. Sur la figure 1, la plaquette 10 est vue par-dessous, la semelle 1 étant au premier plan.

La plaquette 11 (première plaquette) est en regard d'un disque 9 qui est entrainé par la roue du véhicule. Une seconde plaquette (non-visible) identique est située de l'autre côté du disque 9 et en regard de la première plaquette 11 de telle sorte que ces deux plaquettes prennent en sandwich le disque 9. Le freinage du disque 9 est réalisé par friction des deux garnitures (13) contre le disque 9 lorsque ces deux plaquettes se rapprochent du disque 9.

Le système de captation 1 comprend un circuit pneumatique 30 et une source de dépression 20. La plaquette 11 et la seconde plaquette sont reliées à la source de dépression 20 via ce circuit pneumatique 30. Par exemple la source de dépression 20 comporte un moteur électrique 21 et une turbine d'aspiration 22 qui est entrainée par ce moteur électrique 21.

En fonctionnement la source de dépression 20 est apte à aspirer les particules depuis leur émission par les garnitures (13) et au travers du circuit pneumatique 30. Le sens de circulation de l'air et des particules en fonctionnement normal est indiqué par la flèche F sur la figure 1. La flèche F indique donc une circulation de l'amont vers l'aval. Le système de captation 1 comprend en outre un filtre 40 qui est situé sur le circuit 30, c'est-à-dire qu'il est traversé par l'air qui circule dans le circuit 30. Ce filtre 40 est monté sur un support 41 qui est fixé sur le conduit 30. Par exemple le support 41 est un boitier dans lequel est logé le filtre 40, comme représenté sur les figures. Ainsi le filtre 40 sépare le boitier 41 en une partie amont et une partie aval. L'air provenant de la partie amont du circuit 30 entre dans le boitier 41 à l'extrémité amont du boitier 41, traverse le filtre 40, et sort du boitier 41 à l'extrémité aval du boitier 41 pour entrer dans la partie aval du circuit 30.

Le système de captation 1 comporte en outre une unité de commande 60 et un dispositif de détection 50 du filtre 40. Cette unité de commande 60 et ce dispositif de détection 50 servent à déterminer une absence du filtre 40 sur son support 41, ou une absence du support 41 sur le conduit 30 (et par conséquent une absence du filtre 40). L'unité de commande 60 reçoit des signaux du dispositif de détection 50 (qui comporte un élément pour générer et envoyer ces signaux), et est également apte à commander la source de dépression 20 et en recevoir des informations. Ces interactions entre l'unité de commande 60, le dispositif de détection 50, et la source de dépression 20 sont représentés schématiquement sur la figure 1 par des lignes continues. Ces interactions peuvent être réalisées par des lignes électriques. Le fonctionnement de cette unité de commande 60 et de ce dispositif de détection 50 est décrit ci-dessous.

En fonctionnement du système de captation 1, le dispositif de détection 50 envoie au moins un signal à l'unité de commande 60. Par « au moins un signal », on entend l'émission soit d'un signal en continu, soit d'un signal à intervalles réguliers, soit d'un signal ponctuel lorsqu'une absence du filtre 40 sur son support 41 est détectée initialement. L'unité de commande 60 détermine une absence du filtre 40 sur la base de ce signal, puis informe un utilisateur de l'absence du filtre 40. Cette information peut se faire par tout moyen, par exemple par affichage sur le tableau de bord du véhicule d'un texte tel que « Filtre absent », ou d'un logo ou d'un voyant lumineux, et/ou par exemple par stimulation de l'utilisateur par des vibrations au moyen d'un système vibratoire situé dans le siège et commandé par l'unité de commande 60.

En complément, cette information peut s'accompagner d'une limitation de la vitesse du véhicule, à l'aide d'un limiteur 70 qui est commandé par l'unité de commande 60 (figure 1). En conséquence la génération de particules lors de freinages est réduite, et la diffusion de ces particules nocives dans la source de dépression 20 et réduite également.

On décrit ci-dessous un premier mode de réalisation du dispositif de détection 50 du filtre 40, en référence à la figure 2. La figure 2 est une vue plus détaillée du support 41, du filtre 40, et du dispositif de détection 50.

Le dispositif de détection 50 comporte un (premier) capteur de pression 51 qui est situé sur le circuit pneumatique 30, en amont du filtre 40. Idéalement, le capteur de pression 51 est situé suffisamment proche du filtre 40 pour que la pression mesurée par le capteur de pression 51 soit identique à la pression à l'endroit où le filtre 40 se trouve, ou devrait se trouver s'il était présent. Ainsi, le capteur de pression 51 est situé soit sur le circuit pneumatique 30 proche du support 41 du filtre 40 (ce qui permet de déterminer une absence du support 41), soit dans le support 41 du filtre 40 comme représenté en figure 2. Par « situé dans le support 41 », on signifie que le capteur de pression est situé sur le support, ou dans le support si ce support est un boitier, et dans tous les cas que ce capteur mesure la pression à l'endroit de ce support 41.

Le capteur de pression 51 est apte à mesurer la (première) pression P₁ dans le circuit pneumatique 30 en amont du filtre 40, et le dispositif de détection 50 est apte à envoyer à l'unité de commande 60 cette mesure dans un signal. Pendant cette mesure, la source de dépression 20 fonctionne selon un état de fonctionnement appelé état de fonctionnement de référence E_{R}. Cet état de fonctionnement est caractérisé par un paramètre qui est par exemple la vitesse de rotation V de la turbine d'aspiration 22. Ainsi, dans l'état de fonctionnement de référence E_{R}, la turbine d'aspiration 22 tourne à une vitesse de rotation V_{R}. L'unité de commande 60 comporte en mémoire une pression de référence P_{R} qui est la pression qui est générée dans le circuit pneumatique 30 en absence de filtre 40 pour l'état de fonctionnement de référence E_{R} de la source de dépression 20. On comprend que cette pression de référence P_{R} varie en fonction de cet état de fonctionnement de référence E_{R}. Ainsi, la pression de référence P_{R} varie en fonction de la vitesse de rotation V_{R} de la turbine 22. L'unité de commande 60, à réception du signal comportant la pression P₁ mesurée dans le circuit pneumatique 30, compare cette pression mesurée P₁ avec la pression de référence P_{R}. Cette pression de référence P_{R} correspond à la pression dans le circuit pneumatique 30 en l'absence de filtre 40 pour l'état de fonctionnement de référence E_{R} de la source de dépression 20, et la mesure de la première pression P₁ par le capteur de pression 51 est effectuée durant cet état de fonctionnement de référence E_{R}. En conséquence, si la première pression P₁ est sensiblement égale à la pression de référence P_{R}, cela signifie que le filtre 40 est absent de son support 41 (ou que le filtre 40 est déchiré), ou que le support 41 (et donc le filtre 40) est absent alors que l'amont du circuit 30 et l'aval du circuit 30 sont raccordés à l'endroit où le support 41 devait se situer. En effet, on note que si le filtre 40 est présent, alors la pression en amont du filtre 40 est supérieure à la pression de référence P_{R} car le filtre 40, même non colmaté, contribue à empêcher le passage de l'air. Ainsi, dans la situation où P₁ est sensiblement égale à P_{R}, l'unité de commande 60 informe l'utilisateur de l'absence du filtre 40. Par « sensiblement égale », on signifie que la pression se situe dans un intervalle réduit autour de la pression de référence. Par exemple cet intervalle est de +/- 1%, ou +/- 2%, ou +/-5%, ou +/- 10% de la valeur de la pression de référence.

Dans la situation particulière où, pour l'état de fonctionnement de référence E_{R}, le support 41 est absent et où l'amont du circuit 30 et l'aval du circuit 30 ne sont pas raccordés, alors la pression mesurée P₁ est sensiblement égale à la pression atmosphérique. Dans ce cas également, l'unité de commande 60 informe l'utilisateur de l'absence du filtre 40.

On décrit ci-dessous une variante (qui ne fait pas partie de la présente invention) du premier mode de réalisation, dans laquelle le dispositif de détection 50 comporte, en plus du premier capteur de pression 51, un second capteur de pression 52. Cette variante est illustrée en figure 3. Le premier capteur de pression 51 est situé en amont du filtre 40, sur le circuit 30. Le second capteur de pression 52 est situé en aval du filtre 40, sur le circuit 30. La configuration où le premier capteur 51 est situé en amont du support 41 et où le second capteur 52 est situé en aval du support 41 permet de déterminer une absence du support 41. Par exemple, le premier capteur 51 et le second capteur 52 sont situés dans le support 41, comme illustré en figure 3. Le premier capteur de pression 51 est apte à mesurer une première pression P₁ dans le circuit pneumatique 30 en amont du filtre 40, et le dispositif de détection 50 est apte à envoyer à l'unité de commande 60 cette mesure dans un signal. En parallèle, par exemple simultanément, le second capteur de pression 52 est apte à mesurer une seconde pression P₂ dans le circuit pneumatique 30 en aval du filtre 40, et le dispositif de détection 50 est apte à envoyer à l'unité de commande 60 cette mesure dans un signal. Par exemple la mesure de la première pression P₁ et la mesure de la seconde pression P₂ sont envoyées dans le même signal. L'unité de commande 60, à réception de ce ou de ces signaux, est apte à comparer la première pression P₁ avec la seconde pression P₂. Si la première pression P₁ est sensiblement égale à la seconde pression P₂, cela signifie que le filtre 40 est absent de son support 41 (ou que le filtre 40 est déchiré), ou que le support 41 (et donc le filtre 40) est absent alors que l'amont du circuit 30 et l'aval du circuit 30 sont raccordés à l'endroit où le support 41 devait se situer. En effet, on note que si le filtre 40 est présent, alors la pression en amont du filtre 40 est supérieure à la pression en aval du filtre 40. Ainsi, dans la situation où P₁ est sensiblement égale à P₂, l'unité de commande 60 informe l'utilisateur de l'absence du filtre 40.

Dans la situation particulière où, en fonctionnement du système de captation, le support 41 est absent et où l'amont du circuit 30 et l'aval du circuit 30 ne sont pas raccordés, alors la pression mesurée P₁ est sensiblement égale à la pression atmosphérique. Dans ce cas également, l'unité de commande 60 informe l'utilisateur de l'absence du filtre 40.

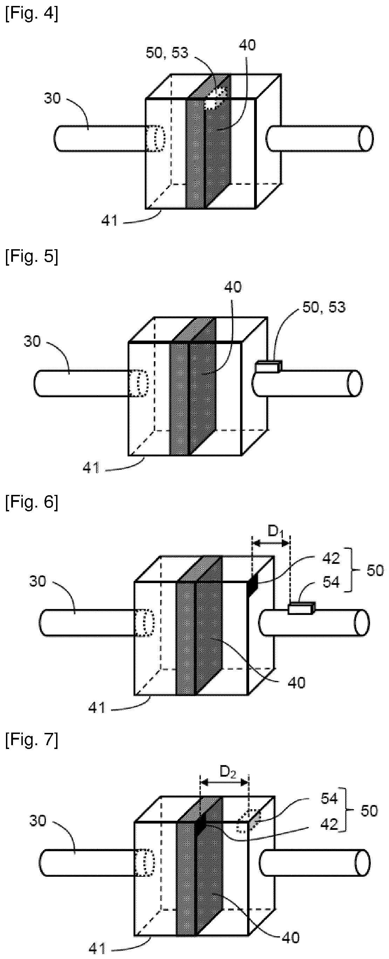

On décrit ci-dessous un deuxième mode de réalisation du dispositif de détection 50 du filtre 40, en référence aux figures 4 et 5.

Le dispositif de détection 50 comporte un détecteur par contact 53. Dans une première variante illustrée en figure 4, ce détecteur par contact 53 est monté sur le support 41 de telle sorte que lorsque le filtre 40 est placé dans (ou sur) le support 41, le filtre 40 est en contact physique avec le détecteur par contact 53. Ce contact physique est réalisé par exemple par un toucher entre le filtre 40 et un élément faisant partie du détecteur par contact 53. Par exemple cet élément est un contacteur rétractable avec rappel (ressort), dont le mouvement de rétraction génère un signal. Alternativement, ce contact physique est réalisé par exemple par une coopération entre un élément mâle monté sur le détecteur par contact 53 (respectivement sur le filtre 40) et un élément femelle monté sur le filtre 40 (respectivement sur le détecteur par contact 53). Ainsi, le détecteur par contact 53 est apte à détecter le contact entre le filtre 40 et le support 41, et donc la présence du filtre 40 dans (ou sur) le support 41. Lorsqu'il n'y a pas de contact entre le filtre 40 et le support 41, c'est-à-dire que le filtre 40 est absent du support 41, le dispositif de détection 50 envoie un signal à l'unité de commande 60. Par exemple ce signal est envoyé à intervalles réguliers tant que le filtre 40 est absent du support 41. L'unité de commande 60, à réception de ce signal, informe un utilisateur de l'absence du filtre 40.

Dans une deuxième variante illustrée en figure 5, le détecteur par contact 53 est monté sur circuit 30, en amont ou en aval du support 41, de telle sorte que lorsque le support 41 est placé sur le circuit 30, le support 41 est en contact physique avec le détecteur par contact 53. Ce contact physique est réalisé par exemple par un toucher entre le support 41 et un élément faisant partie du détecteur par contact 53. Alternativement, ce contact physique est réalisé par exemple par une coopération entre un élément mâle monté sur le détecteur par contact 53 (respectivement sur le support 41) et un élément femelle monté sur le support 41 (respectivement sur le détecteur par contact 53). Lorsqu'il n'y a pas de contact entre le support 41 et le conduit 30, c'est-à-dire que le support 41 n'est pas monté sur le conduit 30 (et donc que le filtre 40 est absent), le dispositif de détection 50 envoie un signal à l'unité de commande 60. Par exemple ce signal est envoyé à intervalles réguliers tant que le support 41 est absent du conduit 30. L'unité de commande 60, à réception de ce signal, informe un utilisateur de l'absence du filtre 40.

On décrit ci-dessous un troisième mode de réalisation du dispositif de détection 50 du filtre 40, en référence aux figures 6 et 7.

Le dispositif de détection 50 comporte un détecteur sans contact 54 et un identifiant (cible) 42 qui est porté par le filtre 40 ou par le support 41. Le détecteur sans contact 54 est apte à détecter la présence de l'identifiant 42 dans un certain volume V₀ autour de ce détecteur 54. Cette détection s'effectue par exemple avec la technologie RFID. La technologie RFID regroupe les technologies où l'identifiant est téléalimenté par le détecteur. Le détecteur sans contact 54 est fixé à proximité du support 41, c'est-à-dire que l'identifiant 42 (qu'il soit porté par le filtre 40 ou par le support 41) se situe dans le volume V₀ autour du détecteur sans contact 54.

Dans une première variante illustrée en figure 6, le détecteur sans contact 54 est fixé sur le conduit 30 en amont ou en aval du support 41, et l'identifiant 42 est porté par le support 41. Ainsi, le détecteur sans contact 54 se situe à une distance D₁ de l'identifiant 42 lorsque le support 41 est monté sur le conduit 30, et le détecteur sans contact 54 est calibré pour que si la distance entre lui-même et l'identifiant 42 est supérieure à la distance D₁, c'est-à-dire si le support 41 (et donc le filtre 40) est absent du conduit 30, l'identifiant 42 n'est pas détectée. Dans ce cas le dispositif de détection 50 envoie un signal à l'unité de commande 60. Par exemple ce signal est envoyé à intervalles réguliers tant que le support 41 est absent du conduit 30. L'unité de commande 60, à réception de ce signal, informe un utilisateur de l'absence du filtre 40. Dans cette variante, l'identifiant 42 pourrait être portée par le filtre 40 du moment que le détecteur sans contact 54 se situe alors à la distance D₁ de l'identifiant 42.

Dans une deuxième variante illustrée en figure 7, le détecteur sans contact 54 est fixé sur le support 41 (par exemple il est placé dans le boitier lorsque le support 41 est un boitier), et l'identifiant 42 est porté par le filtre 40, de telle sorte que le détecteur sans contact 54 se situe à une distance D₂ de l'identifiant 42 lorsque le filtre 40 est monté sur le support 41. Le détecteur sans contact 54 est calibré pour que si la distance entre lui-même et l'identifiant 42 est supérieure à la distance D₂, c'est-à-dire si le filtre 40 est absent du support 41, l'identifiant 42 n'est pas détecté. Dans ce cas le dispositif de détection 50 envoie un signal à l'unité de commande 60. Par exemple ce signal est envoyé à intervalles réguliers tant que le filtre 40 est absent du support 41. L'unité de commande 60, à réception de ce signal, informe un utilisateur de l'absence du filtre 40.

Les différents modes de réalisation décrits ci-dessus peuvent être utilisés seuls, ou en combinaison par deux ou plus.

Dans certains modes de réalisation, notamment dans le troisième mode décrit ci-dessus avec une coopération mâle-femelle entre le filtre 40 et le détecteur par contact 53 monté sur le support 41, le support 41 n'est par exemple capable de recevoir qu'un certain type de filtre 40 (il s'agit des filtres 40 dont l'élément mâle (respectivement femelle) est apte à coopérer avec l'élément femelle (respectivement mâle) du détecteur par contact 53. Ainsi, on peut s'assurer que seul un certain filtre 40 (par exemple d'une qualité ou d'une marque donnée) est monté sur le support 41. De façon similaire, dans le cas d'une coopération mâle-femelle entre le support 41 et le détecteur par contact 53 monté sur le conduit 30, le conduit 30 n'est par exemple capable de recevoir qu'un certain type de support 41. Ainsi, on peut s'assurer que seul un certain support 41 portant un certain filtre 40 (par exemple d'une qualité ou d'une marque donnée) est monté sur le conduit 30.

Dans le quatrième mode de réalisation, l'identifiant 42 peut être identique quel que soit le filtre 40 ou le support 41, auquel cas cet identifiant 42 sert uniquement à déterminer si le filtre 40 est présent ou absent sur le circuit 30. Alternativement, l'identifiant 42 peut être distinct (par le biais d'un code qu'il contient) pour chaque filtre 40 (ou chaque support 41), ou pour chaque type de filtre 40 (ou chaque type de support 41). Dans le dernier cas, le détecteur sans contact 54 peut être configuré pour ne détecter que des identifiants 42 correspondant à un certain type de filtres 40 (ou de support 41 portant ce type de filtres 40), ce qui permet de s'assurer que seul ce type de filtre 40 est monté sur le conduit 30.

L'invention concerne également un procédé de détection de l'absence d'un filtre 40 dans un système de captation 1 des particules de freinage d'un système de freinage à friction 10. Comme décrit ci-dessus, ce système de captation 1 comporte une source de dépression 20, un circuit pneumatique 30 qui relie le système de freinage à friction 10 à la source de dépression 20, un filtre 40 qui est situé sur le circuit pneumatique 30 et qui est monté sur un support 41. Le procédé comporte les étapes suivantes :
(a) On fournit une unité de commande 60 et un dispositif de détection 50 dudit filtre 40 qui font partie du système de captation 1 ;
(b) Le dispositif de détection 50 envoie au moins un signal à l'unité de commande 60 ;
(c) L'unité de commande 60 détermine, sur la base de ce signal, l'absence du filtre 40 sur le circuit pneumatique 30, et informe un utilisateur de cette absence du filtre 40.

## Revendications

1. Système de captation (1) des particules de freinage d'un système de freinage à friction (10), qui comporte une source de dépression (20), un circuit pneumatique (30) qui relie ledit système de freinage à friction (10) à ladite source de dépression (20), un filtre (40) situé sur ledit circuit pneumatique (30) et monté sur un support (41), **caractérisé en ce que** ledit système de captation (1) comporte une unité de commande (60) et un dispositif de détection (50) dudit filtre (40) qui est apte à envoyer au moins un signal à ladite unité de commande (60), ladite unité de commande (60) étant apte à déterminer, sur la base de ce signal, l'absence dudit filtre (40) sur ledit circuit pneumatique (30), et à informer un utilisateur de cette absence dudit filtre (40), ledit dispositif de détection (50) comportant un unique capteur de pression (51) qui est situé sur ledit circuit pneumatique (30) en amont dudit filtre (40), ledit capteur de pression (51) étant apte à envoyer à ladite unité de commande (60) dans un signal une mesure de la pression P₁ dans ledit circuit pneumatique (30) en amont dudit filtre (40), ladite unité de commande (60), à réception dudit signal, étant apte à comparer ladite pression mesurée P₁ avec une pression de référence P_{R} qui est la pression dans ledit circuit pneumatique (30) en absence de filtre (40) pour l'état de fonctionnement de référence E_{R} de ladite source de dépression (20) lors de ladite mesure de pression P₁ par ledit capteur de pression (51), ladite unité de commande (60) étant apte à informer un utilisateur de l'absence dudit filtre (40) sur ledit circuit pneumatique (30) lorsque ladite pression mesurée P₁ est sensiblement égale à ladite pression de référence P_{R} ou est sensiblement égale à la pression atmosphérique.

2. Système de captation (1) selon la revendication 1, dans lequel ledit dispositif de détection (50) comporte un détecteur par contact (53) qui est apte à détecter le contact entre ledit filtre (40) et ledit support (41), ledit détecteur par contact (53) étant apte à envoyer un signal à ladite unité de commande (60) lorsqu'il n'y a pas de contact entre ledit filtre (40) et ledit support (41), ladite unité de commande (60), à réception dudit signal, étant apte à informer un utilisateur de l'absence dudit filtre (40).

3. Système de captation (1) selon l'une quelconque des revendications 1 ou 2 dans lequel ledit dispositif de détection (50) comporte un détecteur par contact (53) qui est apte à détecter le contact entre ledit support (41) et ledit circuit (30), ledit détecteur par contact (53) étant apte à envoyer un signal à ladite unité de commande (60) lorsqu'il n'y a pas de contact entre ledit support (41) et ledit circuit (30), ladite unité de commande (60), à réception dudit signal, étant apte à informer un utilisateur de l'absence dudit filtre (40).

4. Système de captation (1) selon l'une quelconque des revendications 1 à 3 dans lequel ledit dispositif de détection (50) comporte un identifiant (42) qui est portée par ledit filtre (40) ou par ledit support (41) et un détecteur sans contact (54) qui est fixé à proximité dudit support (41) et qui est apte à détecter la présence dudit identifiant (42), ledit détecteur sans contact (54) étant apte à envoyer un signal à ladite unité de commande (60) lorsque ledit identifiant (42) n'est pas détecté par ledit détecteur sans contact (43), ladite unité de commande (60), à réception dudit signal, étant apte à informer un utilisateur de l'absence dudit filtre (40).

5. Système de captation (1) selon la revendication 4 dans lequel ledit identifiant (42) est porté par ledit support (41) et ledit détecteur sans contact (54) est fixé sur ledit conduit (30).

6. Système de captation (1) selon la revendication 4 dans lequel ledit identifiant (42) est porté par ledit filtre (40) et ledit détecteur sans contact (54) est fixé sur ledit support (41).

7. Procédé de détection de l'absence d'un filtre (40) dans un système de captation (1) des particules de freinage d'un système de freinage à friction (10), ce système de captation (1) comportant une source de dépression (20), un circuit pneumatique (30) qui relie ledit système de freinage à friction (10) à ladite source de dépression (20), un filtre (40) situé sur ledit circuit pneumatique (30) et monté sur un support (41), ledit procédé étant **caractérisé en ce qu'**il comporte les étapes suivantes :
(a) On fournit une unité de commande (60) et un dispositif de détection (50) dudit filtre (40) qui font partie dudit système de captation (1), ledit dispositif de détection (50) comportant un unique capteur de pression (51) qui est situé sur ledit circuit pneumatique (30) en amont dudit filtre (40), ;
(b) ledit capteur de pression (51) envoie au moins un signal à ladite unité de commande (60), le signal comportant une mesure de la pression P₁ dans ledit circuit pneumatique (30) en amont dudit filtre (40),;
(c) Ladite unité de commande (60) compare ladite pression mesurée P₁ avec une pression de référence P_{R} qui est la pression dans ledit circuit pneumatique (30) en absence de filtre (40) pour l'état de fonctionnement de référence E_{R} de ladite source de dépression (20) lors de ladite mesure de pression P₁ par ledit capteur de pression (51), détermine l'absence dudit filtre (40) sur ledit circuit pneumatique (30) lorsque ladite pression mesurée P₁ est sensiblement égale à ladite pression de référence P_{R} ou est sensiblement égale à la pression atmosphérique, et informe un utilisateur de cette absence dudit filtre (40).

## Patentansprüche

1. Erfassungssystem (1) zum Erfassen von Bremspartikeln einer Reibungsbremsanlage (10), das aufweist: eine Unterdruckquelle (20), eine Pneumatikleitung (30), die die Reibungsbremsanlage (10) mit der Unterdruckquelle (20) verbindet, ein Filter (40), das an der Pneumatikleitung (30) angeordnet ist und an einem Träger (41) angebracht ist, **dadurch gekennzeichnet, dass** das Erfassungssystem (1) eine Steuereinheit (60) und eine Detektionsvorrichtung (50) zum Detektieren des Filters (40) aufweist, die fähig ist, mindestens ein Signal zu der Steuereinheit (60) zu schicken, wobei die Steuereinheit (60) fähig ist, auf Basis dieses Signals die Abwesenheit des Filters (40) an der Pneumatikleitung (30) zu bestimmen und einen Nutzer über diese Abwesenheit des Filters (40) zu informieren, wobei die Detektionsvorrichtung (50) einen einzigen Drucksensor (51) aufweist, der an der Pneumatikleitung (30) stromauf des Filters (40) angeordnet ist, wobei der Drucksensor (51) fähig ist, in einem Signal einen Messwert des Drucks P₁ in der Pneumatikleitung (30) stromauf des Filters (40) zu der Steuereinheit (60) zu schicken, wobei die Steuereinheit (60) bei Empfang des Signals fähig ist, den gemessenen Druck P₁ mit einem Referenzdruck P_{R} zu vergleichen, der der Druck in der Pneumatikleitung (30) bei Abwesenheit des Filters (40) für den Referenzbetriebszustand E_{R} der Unterdruckquelle (20) während der Messung des Drucks P₁ durch den Drucksensor (51) ist, wobei die Steuereinheit (60) fähig ist, einen Nutzer über die Abwesenheit des Filters (40) an der Pneumatikleitung (30) zu informieren, wenn der gemessene Druck P₁ im Wesentlichen gleich dem Referenzdruck P_{R} oder im Wesentlichen gleich dem Atmosphärendruck ist.

2. Erfassungssystem (1) nach Anspruch 1, in welchem die Detektionsvorrichtung (50) einen Kontaktdetektor (53) aufweist, der fähig ist, den Kontakt zwischen dem Filter (40) und dem Träger (41) zu detektieren, wobei der Kontaktdetektor (53) fähig ist, ein Signal zu der Steuereinheit (60) zu schicken, wenn es keinen Kontakt zwischen dem Filter (40) und dem Träger (41) gibt, wobei die Steuereinheit (60) bei Empfang des Signals fähig ist, einen Nutzer über die Abwesenheit des Filters (40) zu informieren.

3. Erfassungssystem (1) nach einem der Ansprüche 1 oder 2, in welchem die Detektionsvorrichtung (50) einen Kontaktdetektor (53) aufweist, der fähig ist, den Kontakt zwischen dem Träger (41) und der Leitung (30) zu detektieren, wobei der Kontaktdetektor (53) fähig ist, ein Signal zu der Steuereinheit (60) zu schicken, wenn es keinen Kontakt zwischen dem Träger (41) und der Leitung (30) gibt, wobei die Steuereinheit (60) bei Empfang des Signals fähig ist, einen Nutzer über die Abwesenheit des Filters (40) zu informieren.

4. Erfassungssystem (1) nach einem der Ansprüche 1 bis 3, in welchem die Detektionsvorrichtung (50) aufweist: einen von dem Filter (40) oder dem Träger (41) getragenen Identifikator (42) und einen kontaktlosen Detektor (54), der in der Nähe des Trägers (41) angebracht ist und der fähig ist, die Anwesenheit des Identifikators (42) zu detektieren, wobei der kontaktlose Detektor (54) fähig ist, ein Signal zu der Steuereinheit (60) zu schicken, wenn der Identifikator (42) von dem kontaktlosen Detektor (43) nicht detektiert worden ist, wobei die Steuereinheit (60) bei Empfang des Signals fähig ist, einen Nutzer über die Abwesenheit des Filters (40) zu informieren.

5. Erfassungssystem (1) nach Anspruch 4, in welchem der Identifikator (42) von dem Träger (41) getragen wird und der kontaktlose Detektor (54) an der Leitung (40) angebracht ist.

6. Erfassungssystem (1) nach Anspruch 4, in welchem der Identifikator (42) von dem Filter (40) getragen wird und der kontaktlose Detektor (54) an dem Träger (41) angebracht ist.

7. Verfahren zur Detektion der Abwesenheit eines Filters (40) in einem Erfassungssystem (1) zum Erfassen von Bremspartikeln einer Reibungsbremsanlage (10), wobei das Erfassungssystem (1) aufweist: eine Unterdruckquelle (20), eine Pneumatikleitung (30), die die Reibungsbremsanlage (10) mit der Unterdruckquelle (20) verbindet, ein Filter (40), das an der Pneumatikleitung (30) angeordnet ist und an einem Träger (41) angebracht ist, wobei das Verfahren **dadurch gekennzeichnet ist, dass** es die folgenden Schritte aufweist, in denen:
(a) eine Steuereinheit (60) und eine Detektionsvorrichtung (50) zur Detektion des Filters (40) bereitgestellt werden, die Teil des Erfassungssystems (1) sind, wobei die Detektionsvorrichtung (50) einen einzigen Drucksensor (51) aufweist, der an der Pneumatikleitung (30) stromauf des Filters (40) angeordnet ist;
(b) von dem Drucksensor (51) mindestens ein Signal zu der Steuereinheit (60) geschickt wird, wobei das Signal einen Messwert des Drucks P₁ in der Pneumatikleitung (30) stromauf des Filters (40) aufweist;
(c) die Steuereinheit (60) den gemessenen Druck P₁ mit einem Referenzdruck P_{R} vergleicht, der der Druck in der Pneumatikleitung (30) bei Abwesenheit des Filters (40) für den Referenzbetriebszustand E_{R} der Unterdruckquelle (20) während der Messung des Drucks P₁ durch den Drucksensor (51) ist, die Abwesenheit des Filters (40) an der Pneumatikleitung (30) bestimmt, wenn der gemessene Druck P₁ im Wesentlichen gleich dem Referenzdruck P_{R} oder im Wesentlichen gleich dem Atmosphärendruck ist, und einen Nutzer über diese Abwesenheit des Filters (40) informiert.

## Claims

1. System (1) for capturing braking particles from a friction brake system (10), which comprises a vacuum source (20), a pneumatic circuit (30) which connects said friction brake system (10) to said vacuum source (20), and a filter (40) located on said pneumatic circuit (30) and mounted on a support (41), **characterized in that** said capturing system (1) comprises a control unit (60) and a detection device (50) for said filter (40) which is capable of sending at least one signal to said control unit (60), said control unit (60) being capable, on the basis of this signal, of identifying the absence of said filter (40) on said pneumatic circuit (30) and of informing a user of this absence of said filter (40), said detection device (50) comprising exactly one pressure sensor (51) which is located on said pneumatic circuit (30) upstream of said filter (40), said pressure sensor (51) being capable of sending in a signal to said control unit (60) a measurement of the pressure P₁ in said pneumatic circuit (30) upstream of said filter (40), said control unit (60), upon receiving said signal, being capable of comparing said measured pressure P₁ with a reference pressure P_{R} which is the pressure in said pneumatic circuit (30) in the absence of a filter (40) for the reference operating state E_{R} of said vacuum source (20) during said measurement of pressure P₁ by said pressure sensor (51), said control unit (60) being capable of informing a user of the absence of said filter (40) on said pneumatic circuit (30) when said measured pressure P₁ is substantially equal to said reference pressure P_{R} or is substantially equal to the atmospheric pressure.

2. Capturing system (1) according to claim 1, wherein said detection device (50) comprises a contact detector (53) which is capable of detecting contact between said filter (40) and said support (41), said contact detector (53) being capable of sending a signal to said control unit (60) when there is no contact between said filter (40) and said support (41), said control unit (60), upon receiving said signal, being capable of informing a user of the absence of said filter (40).

3. Capturing system (1) according to any one of claims 1 or 2, wherein said detection device (50) comprises a contact detector (53) which is capable of detecting contact between said support (41) and said circuit (30), said contact detector (53) being capable of sending a signal to said control unit (60) when there is no contact between said support (41) and said circuit (30), said control unit (60), upon receiving said signal, being capable of informing a user of the absence of said filter (40).

4. Capturing system (1) according to any one of claims 1 to 3, wherein said detection device (50) comprises an identifier (42) which is carried by said filter (40) or by said support (41) and a contactless detector (54) which is fixed close to said support (41) and which is capable of detecting the presence of said identifier (42), said contactless detector (54) being capable of sending a signal to said control unit (60) when said identifier (42) is not detected by said contactless detector (43), said control unit (60), upon receiving said signal, being capable of informing a user of the absence of said filter (40).

5. Capturing system (1) according to claim 4, wherein said identifier (42) is carried by said support (41) and said contactless detector (54) is fixed to said pipe (30).

6. Capturing system (1) according to claim 4, wherein said identifier (42) is carried by said filter (40) and said contactless detector (54) is fixed to said support (41).

7. Method for detecting the absence of a filter (40) in a system (1) for capturing braking particles from a friction brake system (10), this capturing system (1) comprising a vacuum source (20), a pneumatic circuit (30) which connects said friction brake system (10) to said vacuum source (20), and a filter (40) located on said pneumatic circuit (30) and mounted on a support (41), said method being **characterized in that** it comprises the following steps:
(a) Providing a control unit (60) and a detection device (50) for said filter (40), as part of said capturing system (1), the detection device (50) comprising exactly one pressure sensor (51) located on the pneumatic circuit (30) upstream of the filter (40);
(b) Sending, by said detection device (50), at least one signal to said control unit (60), the signal comprising a measurement of a pressure P₁ in the pneumatic circuit (30) upstream of the filter (40);
(c) Comparing, by the control unit (60), said pressure P₁ with a reference pressure P_{R} which is the pressure in said pneumatic circuit (30) in the absence of a filter (40) for the reference operating state E_{R} of said vacuum source (20) during said measurement of pressure P₁ by said pressure sensor (51), said control unit (60) determining the absence of said filter (40) on said pneumatic circuit (30) when said measured pressure P₁ is substantially equal to said reference pressure P_{R} or is substantially equal to the atmospheric pressure, and said control unit (60) informs a user of the absence of the filter (40).
